# EUROPEAN PATENT APPLICATION

(11) **EP 1 352 735 A2**
(43) Date of publication of application: **15.10.2003**
(21) Application number: 03008108.7
(22) Date of filing: 07.04.2003
(51) Int. Cl.: B29D 11/00, B29C 33/00

(54) **Process for producing an ocular lens having a highly hydrophilic lens surface and ocular lens produced by the process**

(30) Priority: 09.04.2002 JP 2002105972
(71) Applicant: Menicon Co., Ltd., Nagoya-shi Aichi-ken (JP)
(72) Inventor: Hiratani, Haruyuki, c/o Menicon Co., Ltd., Kasugai-shi, Aichi (JP); Ishihara, Kenichi, c/o Menicon Co., Ltd., Kasugai-shi, Aichi (JP); Baba, Masaki, c/o Menicon Co., Ltd., Kasugai-shi, Aichi (JP)
(74) Representative: Wächtershäuser, Günter, Prof. Dr.

(57) **Abstract**

A process for producing an ocular lens having a highly hydrophilic lens surface, comprising a polymer obtained by polymerizing a monomer mixture containing a hydrophilic monomer, which comprises:
a step of preparing a mold equipped with a molding cavity to provide an intended lens shape, comprising a material containing by bonding a component capable of forming hydrogen bonds with the hydrophilic monomer and capable of being dissolved in water, an organic solvent or their mixed solvent,
a step of putting the monomer mixture into the molding cavity of the mold and polymerizing it, and
a step of dissolving the mold in the water, the organic solvent or their mixed solvent after completion of the polymerization, so that an ocular lens comprising the polymer and having an intended lens shape, formed in the molding cavity of the mold, is taken out.

## Description

The present invention relates to a process for producing an ocular lens having a highly hydrophilic lens surface and an ocular lens produced by the process. Particularly, it relates to a process to impart high hydrophilicity to an ocular lens surface without employing a complicated treatment step, and an ocular lens having a highly hydrophilic surface produced by such a process.

In recent years, a hard contact lens comprising a copolymer of e.g. siloxanyl methacrylate or a fluoroalkyl methacrylate, wherein oxygen permeability is imparted to its material itself so as not to inhibit metabolism of the cornea, has been used practically. However, such an oxygen permeable hard contact lens has high water repellency on its surface, the tear and the lens surface are not compatible well when the lens is put on the eye, and the tear tends to be repelled on the lens surface, and accordingly the user may feel uncomfortableness such as feeling of dryness. Further, the tear that presents between the lens and the cornea tends to be hardly changed, whereby lipid components in the tear are likely to deposit on the lens surface, thus impairing optical properties of the lens, or causing cloudiness or blur in the field of view, and further, there is such inherent fear that stain on the lens surface may impair the cornea.

On the other hand, a soft contact lens, which is flexible itself, which is likely to fit the cornea, and which provides favorable feeling, has been known. As many of such soft contact lenses comprise a water-absorptive material which absorbs water and becomes flexible, there are various problems such as generation of bacteria or fungi inside the lens. Thus, a non water-absorptive soft contact lens comprising a flexible material which absorbs and contains substantially no water, which can prevent generation of e.g. bacteria inside the lens, has been developed. However, even with respect to such a non water-absorptive soft contact lens, as the lens surface is water repellent, there are problems similar to those of the oxygen permeable hard contact lens, and further, due to the flexibility of the lens, such a problem that the lens is adsorbed on the cornea has newly arisen.

Accordingly, various methods to make the contact lens surface hydrophilic have been proposed, in order to overcome the above problems based on water repellency on the lens surface. For example, a method of molding a contact lens by using a mold made of polypropylene subjected to plasma treatment prior to polymerization, a method of applying plasma treatment to the surface of a contact lens material so as to improve wettability as disclosed in JP-B-63-40293, and a method of grafting a hydrophilic monomer to the ocular lens surface, as disclosed in JP-A-6-49251, have been proposed.

However, in a method of molding a contact lens by using a mold made of polypropylene subjected to a plasma treatment prior to polymerization, and polymerizing a monomer composition in the mold, it is very difficult to take out a lens from the mold, after the lens material is polymerized in the mold, and in some cases, the lens may be broken. Further, it is technically difficult to precisely control the surface modification of the mold by the plasma treatment, and the reproducibility was poor regarding the surface wettability of the obtained lens. Further, even if such a complicated treatment: is carried out, only a slight number of hydrophilic groups are present among a large number of hydrophobic groups on the lens surface.

Further, a method of applying plasma treatment to the surface of the contact lens material to improve the wettability, and a method of graft polymerization of a hydrophilic monomer to the ocular lens surface, are methods wherein the lens shape is once secured, and then the lens surface is chemically modified. Accordingly, the material tends to deform, and thus optical functions of the ocular lens material may be impaired, and at the same time, part of the chemical bonds on the lens surface tend to be destroyed due to plasma irradiation, and a decomposed product caused by this tends to impair hydrophilization of the lens surface.

Further, no adequate hydrophilicity can be imparted to the lens surface by any of the above methods, and a complicated treatment step is required even though the effect does not last long, and thus there is also such an inherent problem that the time and cost required for the lens production tend to increase.

On the other hand, as proposed in Journal of Biomedical Material Research 35, pages 349-356, 1997, it has been known to produce a contact lens (ocular lens) having a high hydrophilicity on its surface, by using a mold comprising a material showing affinity for a relatively hydrophilic component such as nylon or polyacrylonitrile, such as a method for producing a water-absorptive soft contact lens using a mold comprising a polymer containing acrylonitrile as the base. However, in such a conventional production method, the physical interaction between the mold and the contact lens material is extremely strong, whereby it is very difficult to detach the contact lens polymerized in the mold from said mold, and the contact lens may be broken at the time of detachment.

Under these circumstances, the present invention has been made to overcome the above problems, and it is an object of the present invention to provide a process for producing an ocular lens having a highly hydrophilic lens surface, without applying a complicated treatment wherein the hydrophilicity on the obtained lens surface lasts for a long time. Further, it is also an object of the present invention to provide an ocular lens having such a highly hydrophilic lens surface.

The present invention provides a process for producing an ocular lens having a highly hydrophilic lens surface, comprising a polymer obtained by the polymerization of monomer mixture containing a hydrophilic monomer, which comprises a step of preparing a mold equipped with a molding cavity to provide an intended lens shape, comprising a material containing by bonding a component capable of forming hydrogen bonds with the hydrophilic monomer and capable of being dissolved in water, an organic solvent or their mixed solvent, a step of putting the monomer mixture into the molding cavity of the mold and polymerizing it, and a step of dissolving the mold in the water, the organic solvent or their mixed solvent after completion of the polymerization, so that an ocular lens comprising the polymer and having an intended lens shape, formed in the molding cavity of the mold, is taken out.

In the process for producing an ocular lens according to the present invention, a mold used for polymerization of a monomer mixture as a lens material comprises a material containing by bonding a component capable of forming hydrogen bonds with a hydrophilic monomer contained when the monomer mixture, and accordingly when the monomer mixture as a lens material is put into the molding cavity of the mold prior to polymerization, hydrogen bonds are formed between the hydrophilic monomer in the monomer mixture and the mold, more specifically the material constituting the molding cavity surface, and the polymerization of the monomer mixture proceeds in such a state. Namely, the polymerization of the monomer mixture proceeds in such a state that the hydrophilic monomer in the monomer mixture is drawn to the molding cavity surface of the mold. Accordingly, on the surface of the polymer (ocular lens) obtained after the polymerization, the hydrophilic monomer component is present as aligned, and thus the surface of the ocular lens shows high hydrophilicity (wettability).

Further, since the mold used in the present invention can be dissolved in water, an organic solvent or their mixed solvent as described above, an intended ocular lens can be taken out from the mold without breakage, by extremely simple means of dissolving the mold in water, the organic solvent or their mixed solvent after completion of the polymerization.

According to one preferred embodiment of the process for producing an ocular lens having high hydrophilicity according to the present invention, after the monomer mixture is put into the molding cavity of the mold, a step of holding the monomer mixture and the inner surface of the molding cavity in a contact state is carried out, and then the polymerization starts. By means of this holding step, hydrogen bonds will more advantageously be formed between the hydrophilic monomer in the monomer mixture and the mold, and accordingly, hydrophilicity of the obtained ocular lens surface will -further improve.

According to another preferred embodiment of the process for producing an ocular lens according to the present invention, the hydrophilic monomer is preferably an unsaturated compound having at least one functional group selected from a hydroxyl group, a carboxyl group, an amino group, a substituted amino group, an amide group, a substituted amide group, an ether group, a sulfonic acid group, a sulfonyl group and cyclic nitrogen. When a monomer mixture containing such a specific hydrophilic monomer is selected as the lens material, the object of the present invention will more advantageously be realized.

Further, according to another preferred embodiment of the process for producing an ocular lens of the present invention, the mold comprises a homopolymer of the hydrophilic monomer, a copolymer of the hydrophilic monomer with another monomer, or a polyvinyl alcohol. When a mold comprising such a specific polymer is selected, more excellent hydrophilicity can be imparted to the obtained ocular lens.

In addition, according to another preferred embodiment of the process for producing an ocular lens of the present invention, the hydrophilic monomer is an unsaturated compound having at least one functional group selected from a hydroxyl group, an ether group and cyclic nitrogen, and the mold is a homopolymer of an unsaturated carboxylic acid, or a copolymer of an unsaturated carboxylic acid with another monomer.

Further, according to another preferred embodiment of the present invention, the hydrophilic monomer is a hydroxyl group-containing unsaturated compound, and the mold comprises a homopolymer of vinylpyridine or a copolymer of vinylpyridine with another monomer.

Still further, according to another preferred embodiment of the present invention, the hydrophilic monomer is a carboxyl group-containing unsaturated compound, and the mold comprises a homopolymer of acrylamide or a copolymer of acrylamide with another monomer.

As mentioned above, by using a mold comprising a specific polymer depending upon the hydrophilic monomer contained in the monomer mixture, an ocular lens capable of showing more excellent hydrophilicity can be produced.

In addition, the present invention also provides an ocular lens and a contact lens having a highly hydrophilic lens surface, obtained by the process for producing an ocular lens with the above-described excellent advantageous.

Now, the present invention will be described in detail with reference to the preferred embodiments.

In the process for producing an ocular lens having a highly hydrophilic lens surface according to the present invention, a monomer mixture containing a hydrophilic monomer is employed.

As such a hydrophilic monomer, one or at least two hydrophilic monomers are optionally selected, depending upon properties required for the ocular lens, from monomers which interact with water and have high affinity for water, and which are favorably used as the material monomer for an ocular lens. Preferably, an unsaturated compound having at least one functional group selected from a hydroxyl group, a carboxyl group, an amino group, a substituted amino group, an amide group, a substituted amide group, an ether group, a sulfonic acid group, a sulfonyl group and cyclic nitrogen, is selected.

The unsaturated compound having the above specific functional group may, for example, be (meth)acrylic acid, an acrylamide type compound such as diacetone acrylamide, (meth)acrylamide, dimethyl (meth)acrylamide, dimethylaminopropyl (meth)acrylamide, dimethylaminopropyl (meth)acrylamide hydrochloride, N,N-diethylacrylamide, N-isopropylacrylamide, glycerol acrylamide or acrylamide-N-glycolic acid, a (meth)acrylate type compound such as hydroxyethyl (meth)acrylate, hydroxybutyl (meth)acrylate, ethylene glycol mono(meth)acrylate, 2-sulfoethyl (meth)acrylate, phosphorous (meth)acrylate, dimethylaminoethyl (meth)acrylate, diethylaminoethyl (meth)acrylate, t-butylaminoethyl (meth)acrylate or glycerol (meth)acrylate, a sulfone type compound such as vinyl sulfone, styrene sulfonic acid or 2-acrylamide-2-methylpropane sulfonic acid, or acryloyl morpholine, methacryloyl morpholine, N-vinylpyrrolidone, N-vinyl caprolactam, N-vinyl oxazolidone, N-vinyl succinimide, vinylpyridine, vinyl acetate, itaconic acid, crotonic acid, N-vinyl imidazole, vinyl benzyl ammonium salt, vinyl benzyl alcohol or hydroxystyrene. In the present specification, "(meth)acrylic" is a generic name for "acrylic" and "methacrylic", and "(meth)acrylate" is a generic name for "acrylate" and "methacrylate".

If the amount of the hydrophilic monomer in the monomer mixture is too small, hydrophilicity of the surface of the ocular lens obtained by polymerization tends to be inadequate, and on the other hand, if the amount is too large, the inner surface of the molding cavity may be dissolved by the hydrophilic monomer contained in the monomer mixture before and during the polymerization of the monomer mixture, and the obtained ocular lens may have no desired lens shape and may have low optical properties. Accordingly, the hydrophilic monomer is incorporated in the monomer mixture in a proportion of usually from 0.5 to 70 w/w%, preferably from 1 to 50 w/w%, more preferably from 5 to 30 w/w%.

In the monomer mixture, in addition to such a hydrophilic monomer, a compound (monomer) having at least one vinyl group, allyl group, acryl group or methacryl group in its molecule, which has conventionally been used as a material of an ocular lens such as a contact lens, is incorporated. More specifically, a (meth)acrylate such as alkyl (meth)acrylate, siloxanyl (meth)acrylate, fluoroalkyl (meth)acrylate, hydroxyalkyl (meth)acrylate, polyethylene glycol (meth)acrylate or polyhydric alcohol (meth)acrylate, a styrene derivative or N-vinyl lactam may, for example, be optionally incorporated depending upon properties required for the ocular lens. Further, as the case requires, a polyfunctional monomer such as ethylene glycol di(meth)acrylate or diethylene glycol di(meth)acrylate may be incorporated as a crosslinking agent, and further, a necessary polymerization initiator such as a thermal polymerization initiator or a photopolymerization initiator, or an additive such as a sensitizing agent may be incorporated to obtain a monomer mixture as the lens material.

The above monomer mixture is put into a mold equipped with a molding cavity which provides an intended lens shape, and polymerized. The process for producing an ocular lens of the present invention is characterized in that a mold comprising a specific material is used as the mold.

Namely, the mold used in the present invention comprises a material which contains by bonding a component capable of forming hydrogen bonds with the hydrophilic monomer in the monomer mixture and which can be dissolved in water, an organic solvent or their mixed solvent, not a resin which has conventionally been used for polymerization of a monomer mixture to provide an intended ocular lens, such as nylon or polypropylene.

As mentioned above, before the polymerization of the monomer mixture by using a mold comprising the above-described specific material, hydrogen bonds are formed between the monomer mixture and the material constituting the mold. Namely, polymerization of the monomer mixture proceeds in such a state that the hydrophilic monomer present in the monomer mixture is drawn to the inner surface (molding surface) of the molding cavity due to the bonding force of the hydrogen bonds, and accordingly a larger amount of the hydrophilic monomer component is present as aligned on the surface of the polymer (ocular lens) obtained after completion of the polymerization, as compared with an ocular lens obtained by using a conventional mold. Thus, the surface of the obtained ocular lens shows high hydrophilicity, and at the same time, the hydrophilicity will last for a long term. Between the hydrophilic monomer in the monomer mixture and the mold, not only hydrogen bonds but also another physical interaction, for example, a noncovalent bond such as Van der Waals force or electrostatic interaction (including Coulomb force between charged particles and multipole-multipole interaction of e.g. dipole or quadrupole) is also present, and needless to say, such physical interaction also contributes to alignment of the hydrophilic monomer.

The mold used in the present invention can be dissolved in water, an organic solvent or their mixed solvent, as described above, and accordingly it is possible to take out the polymer (ocular lens) extremely easily without impairing the surface of the polymer, by dissolving the mold after completion of the polymerization in its molding cavity in water, the organic solvent or their mixed solvent to remove it. Accordingly, not only a step of detaching the ocular lens from the mold by using e.g. external force as in a conventional method for producing an ocular lens will not be required, but also such fear will be effectively overcome that the ocular lens may be impaired when the lens is detached from the mold, such being problematic in the case of using a conventional mold comprising a material showing affinity for the hydrophilic component in the ocular lens.

Further, in the process for producing an ocular lens according to the present invention, excellent affinity can be imparted to the surface of the obtained ocular lens only by polymerizing the monomer mixture as the lens material in the molding cavity of the mold comprising a specific material, and accordingly a modification treatment to be preliminarily applied to the surface of the mold prior to polymerization of the monomer mixture, or various treatments carried out with a purpose of imparting hydrophilicity to the surface of the obtained polymer (ocular lens) will not be required at all.

The material constituting such a mold is not particularly limited so long as it contains by bonding a component capable of forming hydrogen bonds with the hydrophilic monomer in the monomer mixture to give an intended ocular lens, it can be dissolved in water, an organic solvent or their mixed solvent (such as water, salt solution, methanol, ethanol, propanol or dimethyl sulfoxide or their mixed solvent), and it is suitable as a material constituting the mold. Preferably, a homopolymer of a hydrophilic monomer, a copolymer of such a hydrophilic monomer with another monomer, a polyvinyl alcohol or the like may be employed. As the hydrophilic monomer, an unsaturated compound having at least one functional group selected from a hydroxyl group, a carboxyl group, an amino group, a substituted amino group, an amide group, a substituted amide group, an ether group, a sulfonic acid group, a sulfonyl group and cyclic nitrogen may favorably be used, and as such an unsaturated compound, specifically, compounds such as (meth)acrylic acid, as described above as the hydrophilic monomer preferably contained in the monomer mixture as the lens material, may, for example, be mentioned.

Among these polymers, from the viewpoint of operation efficiency at the time of production of the ocular lens, safety to the environment, production cost and the like, a water-soluble polymer is more preferably employed, and specifically, poly(meth)acrylic acid, poly-N-vinylpyrrolidone, polyhydroxyethyl (meth)acrylate, polydimethylacrylamide, polyvinyl alcohol or a copolymer containing them as a component, is preferably employed.

Further, when the material constituting the mold is selected, a specific material depending upon the type of the hydrophilic monomer contained in the monomer mixture as the lens material, i.e. a material which contains by bonding a component capable of forming strong hydrogen bonds with the hydrophilic monomer, is advantageously selected. This is because stronger hydrogen bonds can be formed between the mold comprising such a material and the hydrophilic monomer in the monomer mixture, whereby the hydrophilic monomer can advantageously be aligned on the surface of the obtained ocular lens (polymer).

The combination of the hydrophilic monomer in the monomer mixture and the corresponding specific material may, for example, be (1) a case where the hydrophilic monomer is an unsaturated compound having at least one functional group selected from a hydroxyl group, an ether group and cyclic nitrogen, and the mold comprises a homopolymer of an unsaturated carboxylic acid or a copolymer of an unsaturated carboxylic acid with another monomer, (2) a case where the hydrophilic monomer is a hydroxyl group-containing unsaturated compound, and the mold comprises a homopolymer of vinylpyridine or a copolymer of vinylpyridine with another monomer, or (3) a case where the hydrophilic monomer is a carboxyl group-containing unsaturated compound, and the mold comprises a homopolymer of acrylamide or a copolymer of acrylamide with another monomer. Further, as specific combinations of these compounds, combinations as identified in the following Table 1 may, for example, be mentioned.

**Table 1**

| Hydrophilic monomer in monomer mixture | Material of mold |
|---|---|
| N-vinylpyrrolidone (N-VP) | Poly(meth)acrylic acid |
| Polyethylene glycol mono(meth)acrylate (PEG) | Poly(meth)acrylic acid |
| Polyvinyl alcohol (PVA) | Poly(meth)acrylic acid |
| 2-Hydroxyethyl methacrylate (HEMA) | Poly(meth)acrylic acid |
| 2-Hydroxyethyl methacrylate (HEMA) | Polyvinylpyridine |
| (Meth)acrylic acid | Polyacrylamide |

In a case where the mold comprising a copolymer of a hydrophilic monomer with another monomer as described above is employed as the mold used in the process of the present invention, the proportion of the hydrophilic monomer contained in the copolymer is at least 50 w/w%, preferably at least 70 w/w%, more preferably at least 90 w/w%. This is because if the amount of the hydrophilic monomer is too small, it tends to be difficult to dissolve the mold after completion of the polymerization, and further, hydrophilicity of the obtained ocular lens surface tends to be inadequate.

As another monomer copolymerized with such a hydrophilic monomer, one conventionally used as the material of a mold, for example, an olefin such as ethylene or propylene, or an unsaturated compound such as styrene, a (meth)acrylate or vinyl lactam, is optionally selected and employed.

Further, in a case where the polymer constituting the mold has a crosslinked structure, there may be fear that it is hardly dissolved in a predetermined solvent such as water, and accordingly the mold preferably comprises a non-crosslinked polymer.

As described above, in the process for producing an ocular lens according to the present invention, the monomer mixture containing the hydrophilic monomer is put into the molding cavity of the mold comprising a specific material, and polymerized according to conventional thermal polymerization method or photopolymerization method.

When the monomer mixture is polymerized, advantageously, the monomer mixture is put into the molding cavity of the mold, and after a step of holding the monomer mixture and the inner surface of the molding cavity in a contact state is carried out, the polymerization starts. By means of this step, adequate hydrogen bonds are formed between the hydrophilic monomer component in the monomer mixture and the inner surface of the cavity, and the hydrophilic monomer component is more advantageously aligned to the inner surface of the molding cavity, and then the polymerization of the monomer mixture starts. Accordingly, in the obtained ocular lens, the hydrophilic monomer component is effectively aligned on the surface, whereby high hydrophilicity can be obtained.

In such a polymerization operation, the time for holding the monomer mixture in the molding cavity after the monomer mixture is put into the molding cavity of the mold, is optionally determined taking the type of the hydrophilic monomer contained in the monomer mixture, the material constituting the mold and the degree of hydrophilicity required for the intended ocular lens into consideration, but it is usually at a level of from 10 seconds to 60 minutes, preferably at a level of from 30 seconds to 30 minutes.

The monomer mixture is polymerized in the molding cavity of the predetermined mold, the mold is dissolved in a predetermined solvent such as water after completion of the polymerization, and an ocular lens consisting of a polymer having an intended lens shape, formed in the molding cavity of the mold, is taken out.

According to the process for producing an ocular lens of the present invention, it is possible to take out an intended ocular lens by simple means of dissolving the mold in water, and thus a problem such as breakage of the ocular lens due to e.g. external force, which has arisen in a conventional method for producing an ocular lens having a highly hydrophilic lens surface, is effectively overcome.

Now, the present invention will be described in further detail with reference to Examples. However, it should be understood that the present invention is by no means restricted to such specific Examples. Further, it should be understood that various changes, modifications and improvements are possible based on knowledge of the person skilled in the art without departing from the intension and the scope of the present invention, in addition to the following Examples and the above specific description.

In the following Tables 2 to 4, "CL" means a contact lens.

### EXAMPLE 1

To 100 parts by weight of a composition for a non water-absorptive contact lens as identified in the following Table 2, 0.8 part by weight of ethylene glycol dimethacrylate as a crosslinking agent and 0.2 part by weight of 2-hydroxy-2-methyl-1-phenyl-propane-1-one (trade name: Darocure 1173) as a polymerization initiator were added to prepare a monomer mixed liquid. Further, as a mold, a mold made of a non-crosslinked polyacrylic acid, consisting of a convex mold and a concave mold (for preparation of a test sample in the form of a disc plate having a diameter of 20 mm and a thickness of 0.3 mm: PAAc mold) was prepared.

Then, the monomer mixed liquid was injected into the molding cavity of the mold, the convex and concave molds were coupled with each other, and the coupled mold was held for 30 minutes. After the holding, the mold was irradiated with ultraviolet rays at room temperature at an irradiation intensity of 11 mW/cm² for 15 minutes by means of an ultraviolet ray irradiation system (UX0302-03, manufactured by Eye Graphics Co., Ltd., measurement wavelength: 365 nm) to polymerize the monomer mixed liquid in the mold. After completion of the polymerization, since the obtained polymer was attached to the mold, the mold was immersed in salt solution to dissolve the mold made of a non-crosslinked polyacrylic acid, whereby the disc plate-shape polymer was taken out. The polymer taken out was washed with solvents in the order of water, 2-propanol, methanol and water, to obtain a test sample 1.

### EXAMPLE 2

The same monomer mixed liquid used in Example 1 was prepared, and as a mold, a mold made of polypropylene, consisting of a convex mold and a concave mold (for preparation of a test sample in the form of a disc plate having a diameter of 20 mm and a thickness of 0.3 mm, PP mold) was prepared. Using this mold, polymerization of the monomer mixed liquid was carried out in the same manner under the same conditions as in Example 1. After completion of the polymerization, the polymer attached to the mold was forcibly detached by external force, and the same washing treatment as in Example 1 was carried out to obtain a test sample 2.

### EXAMPLE 3

To 100 parts by weight of a composition for an oxygen permeable hard contact lens as identified in Table 2, 0.86 part by weight of ethylene glycol dimethacrylate as a crosslinking agent and 0.086 part by weight of 2,2-azobis(2,4-dimethylvaleronitrile) (V65) as a polymerization initiator were added to prepare a monomer mixed liquid. The monomer mixed liquid was injected to the PAAc mold in the same manner as in Example 1, concave and convex molds were coupled with each other, and the coupled mold was held for 30 minutes.

Then, the mold after completion of the holding was disposed in a constant temperature dryer having the atmosphere heated to 50°C for 8 hours to polymerize the monomer mixed liquid in the mold. After completion of the polymerization, since the obtained polymer was attached to the mold, the mold was immersed in salt solution to dissolve the mold made of a non-crosslinked polyacrylic acid, whereby the disc plate-shape polymer was taken out. Then, the obtained polymer was washed in the same manner as in Example 1 to obtain a test sample 3.

### EXAMPLE 4

The same monomer mixed liquid used in Example 3 was polymerized by using the PP mold in the same manner as in Example 2 in the same manner under the same conditions as in Example 3. After completion of the polymerization, the polymer attached to the mold was forcibly detached by external force, and the same washing treatment as in Example 1 was carried out to obtain a test sample 4.

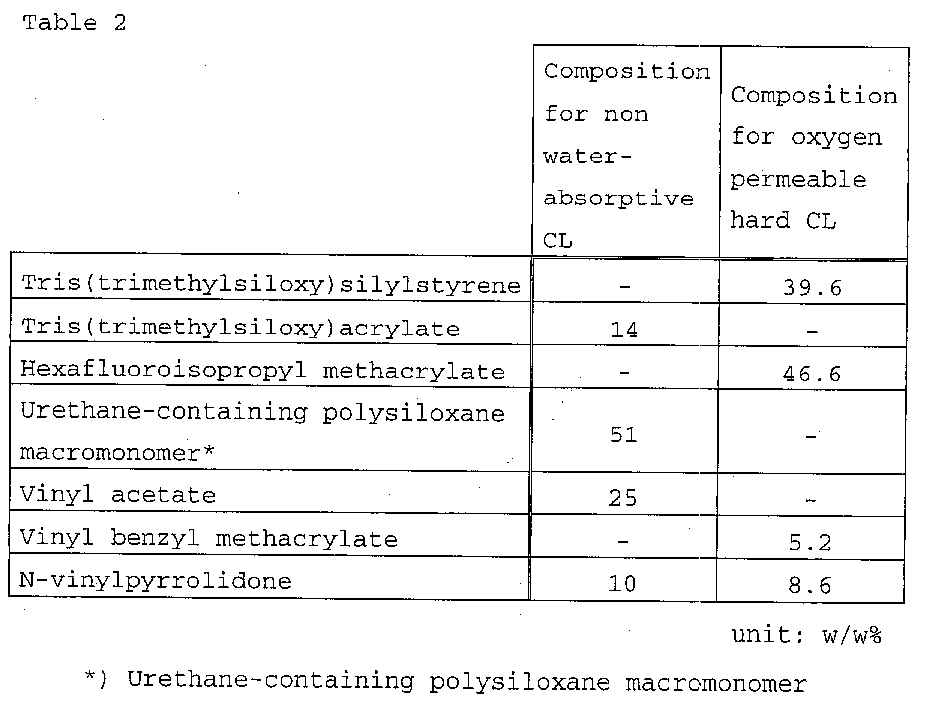

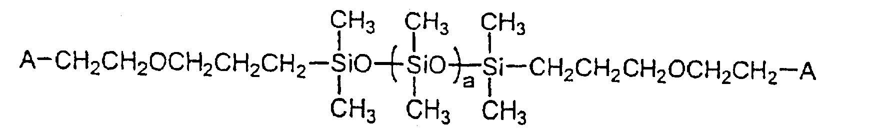

wherein A is a group represented by: 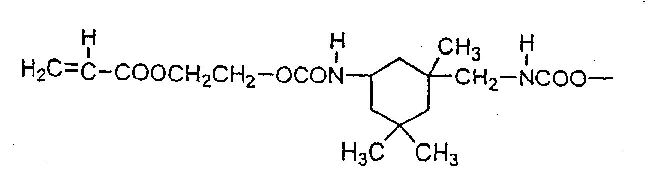 and a is an integer of from 20 to 50.
Number average molecular weight: 6000, average number of urethane groups: 4

With respect to the test samples 1 to 4 obtained in the above respective Examples, the following tests were carried out.

### Measurement of contact angle

The contact angle (°) of each test sample was measured by an air bubble method in water by means of a goniometer (manufactured by ERMA INC., G-1.2MG). Specifically, 2 µL of air bubbles were attached to the test sample immersed in water of 25°C by means of a syringe, the contact angles on right and left sides formed between the air bubbles and the test sample were measured, and the average was calculated. The results are shown in the following Table 3. Further, when the test sample was taken out from water, its surface state was visually observed and evaluated, and the results are also shown in the following Table 3. In Table 3, "○" means that the surface of the test sample was not water repellent but was uniformly wet, i.e. it showed high hydrophilicity (surface wettability), "Δ" means that it was slightly water repellent, and "×" means that it was remarkably water repellent.

**Table 3**

| Test sample | 1 | 2 | 3 | 4 |
|---|---|---|---|---|
| Composition | Composition for non water-absorptive CL | | Composition for oxygen permeable hard CL | |
| Mold used | PAAc mold | PP mold | PAAc mold | PP mold |
| Contact angle (°) | ≦20 | 34 | 31 | 64 |
| Surface state | ○ | × | ○ | × |

As evident from the results shown in Table 3, it was confirmed that the test samples prepared according to the present invention (test samples 1 and 3) comprising either the composition for a non water-absorptive contact lens or the composition for an oxygen permeable hard contact lens, have a smaller contact angle, and their surfaces have excellent surface wettability, as compared with the test samples formed by means of the mold made of polypropylene (test samples 2 and 4).

### Elemental analysis

The compositional ratio of elements (C, F, N, O, Si) was measured by means of an X-ray photoelectron spectrometer (XPS, model JPS-9000MX, manufactured by JEOL Ltd.) with respect to three regions in a depth direction of each dried test sample, specifically, regions with a distance from the surface of from 0 to 100 Å (from 0 to 1.00 × 10⁻⁸ m), from 100 to 200 Å (from 1.00 × 10⁻⁸ to 2.00 × 10⁻⁸ m) and from 200 to 300 Å (from 2.00 × 10⁻⁸ to 3.00 × 10⁻⁸ m). As the measurement conditions for the measurement, the electric current was 10 mA, the voltage was 10 kV, the number of scanning was 4 times, and the voltage step was 0.1 eV. The results of measurement are shown in the following Table 4.

**Table 4**

| Test sample | Composition | Mold used | Element | Distance from sample surface | | |
|---|---|---|---|---|---|---|
| | | | | 0 to 100 Å | 100 to 200 Å | 200 to 300 Å |
| 1 | Composition for non water-absorptive CL | PAAc mold | C | 54 | 54 | 53 |
| | | | N | 7.2 | 3.4 | 3.9 |
| | | | O | 24 | 19 | 20 |
| | | | Si | 15 | 23 | 23 |
| 2 | | PP mold | C | 50 | 56 | 52 |
| | | | N | 3.7 | 3.9 | 4.5 |
| | | | O | 25 | 21 | 23 |
| | | | Si | 21 | 19 | 21 |
| 3 | Composition for oxygen permeable hard CL | PAAc mold | C | 64 | 60 | 60 |
| | | | F | 7 | 13 | 14 |
| | | | N | 6.5 | 4 | 3 |
| | | | O | 18 | 14 | 13 |
| | | | Si | 4 | 10 | 10 |
| 4 | | PP mold | C | 58 | 50 | 53 |
| | | | F | 12 | 10 | 12 |
| | | | N | 2 | 4 | 5 |
| | | | O | 17 | 19 | 16 |
| | | | Si | 11 | 16 | 14 |

As evident from the results shown in Table 4, no significant difference was confirmed in the element compositional ratio in the region with a depth of at least 100 Å from the surface of the test sample, as between the test samples 1 and 2 comprising the composition for a non water-absorptive contact lens. However, in the region in the vicinity of the surface of the test sample (the region with a depth of from 0 to 100 Å from the surface), it is confirmed that the test sample 1 formed by using the PAAc mold has a higher ratio of N atoms derived from N-vinylpyrrolidone as a hydrophilic component, and has a lower ratio of Si atoms derived from tris(trimethylsiloxy) acrylate and urethane-containing polysiloxane macromonomer as water repellent components, as compared with the test sample 2 formed by using the PP mold. From this result, it is considered that the test sample 1 produced according to the process of the present invention has excellent hydrophilicity of the surface (surface wettability) since a large amount of the hydrophilic component moves to the vicinity of the surface and is present there.

Further, also with respect to the test samples 3 and 4 comprising the composition for an oxygen permeable hard contact lens, it is confirmed that in the region in the vicinity of the surface of the test sample, the test sample 3 formed by using the PAAc mold has a high ratio of N atoms derived from N-vinylpyrrolidone as a hydrophilic component and has low ratios of Si atoms derived from tris(trimethylsiloxy) silylstyrene and F atoms derived from hexafluoroisopropyl methacrylate as water repellent components, as compared with the test sample 4 formed by using the PP mold. From this result, it is considered that the test sample 3 produced according to the process of the present invention has excellent hydrophilicity of the surface, since a large amount of the hydrophilic component moves to the vicinity of the surface and is present there.

As evident from the above explanation, in the process for producing an ocular lens of the present invention, the mold comprises a material containing by bonding a component capable of forming hydrogen bonds with a hydrophilic monomer in a monomer mixture as the lens material, and accordingly the hydrophilic monomer component moves to and is aligned on the surface of the polymer (ocular lens) polymerized in such a mold, and a large amount of the hydrophilic monomer component is present there. Thus, the surface of the obtained ocular lens shows high hydrophilicity or surface wettability.

Further, since such a mold can be dissolved in a solvent such as water, an intended ocular lens can easily be taken out from the mold without breakage, by extremely simple means of dissolving the mold after completion of the polymerization in a solvent such as water by e.g. immersion.

Further, the material constituting the mold can be recovered from a solution in which it is dissolved, by reprecipitation and purification operation, and the recovered product can be recycled as a mold after it is pulverized or pelletized.

The entire disclosure of Japanese Patent Application No. 2002-105972 filed on April 9, 2002 including specification, claims and summary is incorporated herein by reference in its entirety.

## Claims

1. A process for producing an ocular lens having a highly hydrophilic lens surface, comprising a polymer obtained by polymerizing a monomer mixture containing a hydrophilic monomer, which comprises:
a step of preparing a mold equipped with a molding cavity to provide an intended lens shape, comprising a material containing by bonding a component capable of forming hydrogen bonds with the hydrophilic monomer and capable of being dissolved in water, an organic solvent or their mixed solvent,
a step of putting the monomer mixture into the molding cavity of the mold and polymerizing it, and
a step of dissolving the mold in the water, the organic solvent or their mixed solvent after completion of the polymerization, so that an ocular lens comprising the polymer and having an intended lens shape, formed in the molding cavity of the mold, is taken out.

2. The process for producing an ocular lens having a highly hydrophilic lens surface according to Claim 1, wherein after the monomer mixture is put into the molding cavity of the mold, a step of holding the monomer mixture and the inner surface of the molding cavity in a contact state is carried out, and then the polymerization starts.

3. The process for producing an ocular lens having a highly hydrophilic lens surface according to Claim 1 or 2, wherein the hydrophilic monomer is an unsaturated compound having at least one functional group selected from a hydroxyl group, a carboxyl group, an amino group, a substituted amino group, an amide group, a substituted amide group, an ether group, a sulfonic acid group, a sulfonyl group and cyclic nitrogen.

4. The process for producing an ocular lens having a highly hydrophilic lens surface according to any one of Claims 1 to 3, wherein the mold comprises a homopolymer of the hydrophilic monomer, a copolymer of the hydrophilic monomer with another monomer, or a polyvinyl alcohol.

5. The process for producing an ocular lens having a highly hydrophilic lens surface according to any one of Claims 1 to 4, wherein the hydrophilic monomer is an unsaturated compound having at least one functional group selected from a hydroxyl group, an ether group and cyclic nitrogen, and the mold comprises a homopolymer of an unsaturated carboxylic acid or a copolymer of an unsaturated carboxylic acid with another monomer.

6. The process for producing an ocular lens having a highly hydrophilic lens surface according to any one of Claims 1 to 4, wherein the hydrophilic monomer is a hydroxyl group-containing unsaturated compound, and the mold comprises a homopolymer of vinylpyridine or a copolymer of vinylpyridine with another monomer.

7. The process for producing an ocular lens having a highly hydrophilic lens surface according to any one of Claims 1 to 4, wherein the hydrophilic monomer is a carboxyl group-containing unsaturated compound, and the mold comprises a homopolymer of acrylamide or a copolymer of acrylamide with another monomer.

8. An ocular lens produced by the process as defined in any one of Claims 1 to 7.

9. A contact lens produced by the process as defined in any one of Claims 1 to 7.
